# EUROPÄISCHE PATENTANMELDUNG

(11) **EP 4 643 971 A1**
(43) Veröffentlichungstag der Anmeldung: **05.11.2025**
(21) Anmeldenummer: 25169956.7
(22) Anmeldetag: 11.04.2025
(51) Int. Cl.: B01D 21/01, B01J 21/18, B01J 35/45, B01J 20/20, C01F 7/04, C02F 1/52, C02F 101/10, C02F 1/28

(54) **SUSPENSION ZUR HERSTELLUNG EINES FÄLLMITTELS IN EINER KLÄRANLAGE DURCH ZUGABE ZU EINER ALUMINIUMQUELLE**

(30) Priorität: 29.04.2024 AT 503592024
(71) Anmelder: Kubinger, Ulrich, 4675 Weibern (AT)
(72) Erfinder: Kubinger, Ulrich, 4675 Weibern (AT)
(74) Vertreter: Hübscher & Partner Patentanwälte GmbH

(57) **Zusammenfassung**

Die Erfindung bezieht sich auf eine Suspension (1) zur Herstellung eines Fällmittels in einer Kläranlage durch Zugabe zu einer Aluminiumquelle. Um die Ressourceneffizienz des Klärprozesses zu steigern, ohne dabei einen erhöhten Aufbereitungsaufwand zu bedingen, umfasst die Suspension (1) Wasser, eine Base zur Entfernung einer reaktionshemmenden Passivierungsschicht der Aluminiumquelle, einen Katalysator und einen Stabilisator zur Stabilisierung der Suspension (1).

## Beschreibung

Die Erfindung bezieht sich auf eine Suspension zur Herstellung eines Fällmittels in einer Kläranlage durch Zugabe zu einer Aluminiumquelle.

Zur Reinigung von Abwässern ist es üblich, aluminiumhaltige Fällmittel einzusetzen. Ein derartiges aluminiumhaltiges Fällmittel ist beispielsweise aus der EP2808306B1 bekannt. Insbesondere bei der industriellen Reinigung von großen Abwassermengen wird dementsprechend viel Fällmittel benötigt, was mit einer ressourcenintensiven Fällmittelbeschaffung einhergeht. Vor allem durch die Vielzahl an miteinander synergistisch im Zusammenhang stehenden Komponenten ist eine homogene Zusammensetzung des Fällmittels entscheidend, sodass bei langen Lagerzeiten eine dementsprechende Aufbereitung durch Fachpersonal oder Maschinen notwendig ist.

Der Erfindung liegt somit die Aufgabe zugrunde, eine Suspension zur Herstellung eines Fällmittels in einer Kläranlage vorzuschlagen, welche die Ressourceneffizienz des Klärprozesses steigert, ohne dabei einen erhöhten Aufbereitungsaufwand zu bedingen.

Die Erfindung löst die gestellte Aufgabe durch eine Suspension zur Herstellung eines Fällmittels in einer Kläranlage durch Zugabe zu einer Aluminiumquelle, umfassend Wasser, eine Base zur Entfernung einer reaktionshemmenden Passivierungsschicht der Aluminiumquelle, einen Katalysator und einen Stabilisator zur Stabilisierung der Suspension.

Der Erfindung liegt dabei der Gedanke zugrunde, dass die Atomökonomie der Aluminiumoxidationsreaktion gesteigert werden kann, indem die Aluminiumquelle als Reaktionsedukt für die Gewinnung von zwei in der Kläranlage genutzten Produkten eingesetzt wird. Durch die Oxidation wird nämlich einerseits aluminiumhaltiges Fällmittel und andererseits elementarer Wasserstoff erzeugt, der vor Ort energetisch verwertet werden kann. Die Oxidationsreaktion von Aluminium in Wasser verläuft nach folgendem Schema:

Al + 3 H₂O → Al(OH)₃ + 1,5 H₂

Um die passivierende Aluminiumhydroxidschicht zu entfernen und damit weitere Oxidation tieferer unter der Aluminiumhydroxidschicht liegenden Schichten der Aluminiumquelle zu ermöglichen, wird eine Base eingesetzt. Gleichzeitig komplexiert die Base das durch die Wasserstoffproduktion als Nebenprodukt entstehende Aluminiumhydroxid zu einem Aluminat, beispielsweise Natriumaluminat, das im Klärprozess als aluminiumhaltiges Fällmittel wirkt.

Al(OH)₃ + OH⁻ → [Al(OH)₄]⁻

Durch den Einsatz der erfindungsgemäßen Suspension wird somit ein aluminiumhaltiges Fällmittel und Wasserstoff zur energetischen Verwertung erzeugt, sodass die Ressourceneffizienz des Klärprozesses erhöht werden kann.

Versuche haben überraschenderweise gezeigt, dass die Reaktion durch Zugabe eines Katalysators in Kombination mit einem Stabilisator verbessert werden kann, da die Sedimentation des Katalysators und die damit einhergehende inhomogenen Reaktionsbedingungen durch den Stabilisator verhindert werden, sodass selbst nach längerer Lagerzeit keine Entmischung stattfindet. Auf diese Weise können aufwändige Arbeitsschritte der Homogenisierung entfallen. Es hat sich herausgestellt, dass durch die Stabilisierung der Suspension zusätzlich automatisierte Leitungssysteme eingesetzt werden können, welche bei herkömmlichen Reaktionssuspensionen zu Ablagerungen und in weiterer Folge zu Verstopfungen tendieren. Als Katalysator können beispielsweise Kohlepulver, Aktivkohle, keramische Katalysatoren, wie Korund, oder mineralische Katalysatoren, wie Kalziumkarbonat, eingesetzt werden. Durch den Einsatz von Kohlenstoffmaterialien mit großer Oberfläche ergeben sich zusätzlich verbesserte Kläreigenschaften, da schwer zu klärende Schmutzstoffe wie Medikamente durch die hohe Sorptionsfähigkeit der Kohlenstoffmaterialien aus der Lösung entfernt werden können. Somit sorgen die Kohlenstoffmaterialien nicht nur für verbesserte Reaktionsbedingungen bei der Herstellung des aluminiumhaltigen Fällmittels und des Wasserstoffs selbst, sondern können diese darüber hinaus in synergistischer Weise den Klärprozess durch ihre absorbierenden bzw. adsorbierenden Eigenschaften weiter verbessern. Es ist dabei unerheblich, welche Aluminiumspezies als Aluminiumquelle dient. Bevorzugte Reaktions- und Transportbedingungen ergeben sich jedoch im Einsatz von elementarem Aluminium als Aluminiumquelle, beispielsweise in der Form von Pellets oder Granulat.

Um sowohl die Produktionsbedingungen als auch die Kläreigenschaften des resultierenden Fällmittels zu verbessern, wird vorgeschlagen, dass die Suspension Kohlenstoffnanomaterialien als Katalysator umfasst. Durch die erhöhte Oberfläche der Kohlenstoffnanomaterialien kann demnach die Reaktionsgeschwindigkeit gesteigert werden, was eine planbare und automatisierte Umsetzung von Aluminium zur Herstellung des Fällmittels ermöglicht.

Als Base können verschiedene handelsübliche Basen verwendet werden, wie beispielsweise Kalium- oder Kalziumhydroxid. Ausschlaggebend ist insbesondere die Fähigkeit, die bei Kontakt mit Wasser oder Luft entstehende Passivierungsschicht der Aluminiumquelle zu lösen. Eine besonders hohe Reaktivität der Suspension und ein vorteilhaftes Reaktionsprodukt kann erreicht werden, wenn die Suspension Natriumhydroxid als Base umfasst. Dadurch kann eine vollständige Umsetzung der Aluminiumquelle unter Ausbildung des gewünschten Fällmittels erreicht werden.

Versuche haben überaschenderweise ergeben, dass ein Absetzen des Katalysators zuverlässig verhindert werden kann, wenn die Suspension Natriumaluminat als Stabilisator umfasst. Vergleichsexperimente ohne Stabilisatorzusatz ergaben, dass bereits geringe Mengen Natriumaluminat eine Heterogenisierung der Suspension deutlich besser als die Vergleichsversuche verhindern können.

Besonders günstige Bedingungen sowohl bezüglich der Stabilität als auch bezüglich der nachfolgenden chemischen Umsetzung zu den gewünschten Produkten ergeben sich dadurch, dass der Stabilisator in der Suspension eine Stoffmengenkonzentration von 0,1 bis 1 mol/L, vorzugsweise eine Stoffmengenkonzentration von 0,2 bis 0,6 mol/L, noch bevorzugter eine Stoffmengenkonzentration von 0,3 bis 0,5 mol/L aufweist.

Die Erfindung bezieht sich auch auf ein Verfahren zur Herstellung eines Fällmittels in einer Kläranlage mit einer erfindungsgemäßen Suspension, wobei eine Aluminiumquelle vorgelegt wird und die Suspension zudosiert wird. Das bei der Reaktion freiwerdende Wasserstoffgas kann hierbei abgezogen werden und vor Ort, beispielsweise in bestehenden Verbrennungsanlagen zur Energierückgewinnung genutzt werden.

Um eine vorteilhafte Reaktionskontrolle zu ermöglichen, kann die Aluminiumquelle in einem einem Klärbecken vorgelagerten Reaktionsbecken vorgelegt werden. Dadurch kann der Herstellungsprozess des Fällmittels separat von dem Klärbecken stattfinden, sodass die Reaktionsbedingungen im Reaktionsbecken vorteilhaft an den Reaktionsverlauf angepasst werden können, ohne dabei die Fällungsbedingungen im Klärbecken zu beeinflussen.

Einfache Konstruktionsbedingungen im Kläranlagenbau ergeben sich, wenn die Aluminiumquelle in einem Klärbecken vorgelegt wird. Dadurch kann auf zusätzliche bauliche Maßnahmen, wie Reaktionsbecken verzichtet werden und die Suspension in bestehenden Kläranlagen ohne weitere bauliche Maßnahmen eingesetzt werden.

Die Erfindung bezieht sich auch auf ein Verfahren zur Phosphatfällung aus Abwässern in einer Kläranlage mit einer erfindungsgemäßen Suspension, wobei zur Herstellung eines Fällmittels eine Aluminiumquelle mit der Suspension vermischt wird, wonach das derart hergestellte Fällmittel einem Klärbecken zudosiert wird. Durch die damit verbundene Wasserstofferzeugung kann die Gesamtenergiebilanz des Klärprozesses verbessert werden.

Um den Aluminiumverbrauch bei gleichbleibend hoher Abwasser Reinigungsleistung reduzieren zu können, wird vorgeschlagen, dass die Menge der zur Aluminiumquelle zugegebenen Suspension in Abhängigkeit von im Klärbecken vorherrschenden Abwasserparametern geregelt wird. Abwasserparameter können beispielsweise Volumenströme des Abwassers in der Kläranlage, Phosphatkonzentrationen, optische Dichten, pH-Werte oder elektrische Leitfähigkeiten des Abwassers sein.

Vorteilhafte Reaktionsbedingungen ergeben sich durch eine Suspension zur Herstellung eines Fällmittels in einer Kläranlage durch Zugabe zu einer Aluminiumquelle, umfassend 70 bis 95 Gew.-% einer wässrigen Base, 4 bis 28 Gew.-% einer alkalischen Aluminiumlösung als Stabilisator und 0,05 bis 2 Gew.-% eines Katalysators. Beispielsweise kann die Suspension 70 bis 95 Gew.-% einer wässrigen Natriumhydroxidlösung (30 Gew.-% NaOH), 4 bis 28 Gew.-% einer Natriumaluminatlösung (5,5 mol/L) als Stabilisator und 0,05 bis 2 Gew.-% nanoskaliertes Kohlepulver als Katalysator umfassen.

In einem Ausführungsbeispiel umfasst die erfindungsgemäße Suspension folgende Komponenten:
90 Gew.-% einer wässrigen Natriumhydroxidlösung (30 Gew.-% NaOH), 9,9 Gew.-% einer alkalischen Aluminiumlösung mit einem Aluminiumgehalt von 5,5 mol/L als Stabilisator, 0,1 Gew.-% nanoskaliertes Kohlepulver als Katalysator

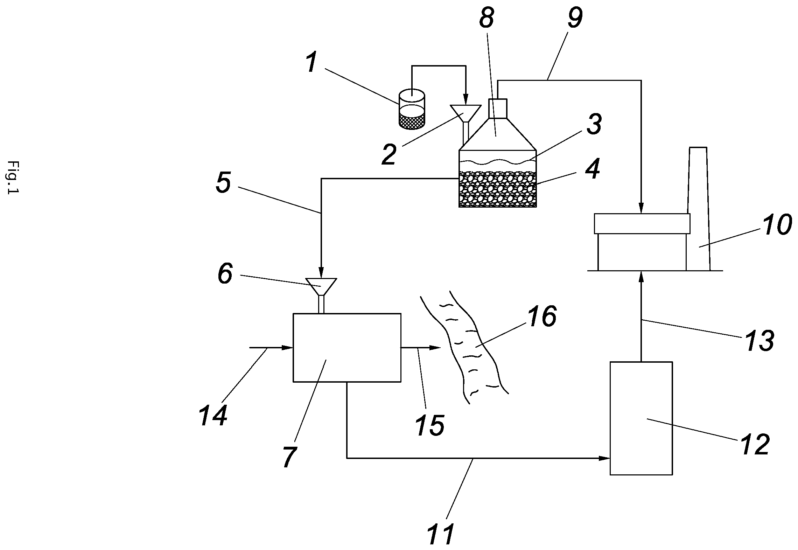

In der Figur wird das Verfahren anhand einer schematisch dargestellten Kläranlage dargestellt.

Die erfindungsgemäße, homogene Suspension 1 kann mithilfe einer Zudosiereinheit 2 in Abhängigkeit von Abwasserparametern zu in einem Reaktionsbecken 3 vorgelegten Aluminiumpellets 4 zudosiert werden. Über eine Fällmittelleitung 5 kann das entstandene Fällmittel zu einer Fällmitteldosiereinheit 6 überführt werden, welche anschließend das Fällmittel in ein Klärbecken 7 zudosiert.

Das im Reaktionsbecken 3 entstehende Wasserstoffgas kann über eine Absaughaube 8 in eine Wasserstoffleitung 9 geleitet werden. Der Wasserstoff kann hierauf beispielsweise zu einer bestehenden Biogasfeuerungsanlage 10, welche zur Verbrennung von aus Klärschlamm 11 in einem Faulturm 12 produzierten Biogas 13 eingesetzt wird, zugegeben werden.

Nach der Klärung des Abwassers 14 im Klärbecken 7 kann das gereinigte Wasser 15 in den Wasserkreislauf 16 rückgeführt werden.

## Patentansprüche

1. Suspension (1) zur Herstellung eines Fällmittels in einer Kläranlage durch Zugabe zu einer Aluminiumquelle, umfassend Wasser, eine Base zur Entfernung einer reaktionshemmenden Passivierungsschicht der Aluminiumquelle, einen Katalysator und einen Stabilisator zur Stabilisierung der Suspension (1).

2. Suspension (1) nach Anspruch 1 **gekennzeichnet durch** Kohlenstoffnanomaterialien als Katalysator.

3. Suspension (1) nach Anspruch 1 oder 2 **gekennzeichnet durch** Natriumhydroxid als Base.

4. Suspension (1) nach einem der Ansprüche 1 bis 3 **gekennzeichnet durch** Natriumaluminat als Stabilisator.

5. Suspension (1) nach einem der Ansprüche 1 bis 4, **dadurch gekennzeichnet, dass** der Stabilisator in der Suspension (1) eine Stoffmengenkonzentration von 0,1 bis 1 mol/L aufweist.

6. Verfahren zur Herstellung eines Fällmittels in einer Kläranlage mit einer Suspension (1) nach einem der Ansprüche 1 bis 5, wobei eine Aluminiumquelle vorgelegt wird und die Suspension (1) zudosiert wird.

7. Verfahren nach Anspruch 6, **dadurch gekennzeichnet, dass** die Aluminiumquelle in einem einem Klärbecken (7) vorgelagerten Reaktionsbecken (3) vorgelegt wird.

8. Verfahren nach Anspruch 6, **dadurch gekennzeichnet, dass** die Aluminiumquelle in einem Klärbecken (7) vorgelegt wird.

9. Verfahren zur Phosphatfällung aus Abwässern in einer Kläranlage mit einer Suspension (1) nach einem der Ansprüche 1 bis 5, wobei zur Herstellung eines Fällmittels eine Aluminiumquelle mit der Suspension (1) vermischt wird, wonach das derart hergestellte Fällmittel einem Klärbecken (7) zudosiert wird.

10. Verfahren nach Anspruch 9, dass die Menge der zur Aluminiumquelle zugegebenen Suspension (1) in Abhängigkeit von im Klärbecken (7) vorherrschenden Abwasserparametern geregelt wird.
